# EUROPEAN PATENT SPECIFICATION

(11) **EP 2 220 954 B1**
(45) Date of publication and mention of the grant of the patent: **13.09.2017**
(21) Application number: 10425012.1
(22) Date of filing: 21.01.2010
(51) Int. Cl.: A43B 7/06, A43B 7/08, A43B 13/12, B29D 35/06, B29D 35/14

(54) **Internal ventilation system applicable to footwear with sole made through direct injection or pouring onto the upper**
Innenbelüftungssystem für Schuhe mit durch Spritzguss oder Abguss auf das Obermaterial hergestellter Sohle
Système de ventilation intérieure pour des chaussures avec semelle injectée ou moulée sur la tige

(30) Priority: 19.02.2009 IT RM20090076
(43) Date of publication of application: 25.08.2010
(73) Proprietor: Calzaturificio Orion S.p.A., 35023 Bagnoli Di Sopra (PD) (IT)
(72) Inventor: Meneghin, Maria Antonietta, Terrassa P. (PD) (IT)
(74) Representative: Rozzi, Giuseppe

(56) References cited:
- EP-A1- 1 266 585
- WO-A1-99/26504
- GB-A- 2 317 096

## Description

This invention relates to an internal ventilation system that can be applied to footwear with sole made through the injection or pouring of plastic material directly onto the upper. As is commonly known, footwear serves to protect the foot while walking. Such function requires the foot to remain for too long inside the closed areas of the footwear, which withholds body heat and does not allow the foot to breathe, however. This often causes - especially in wearers with sensitivity in regard - the foot to sweat and emit odor caused by the accumulation of perspiration inside. Such wearers often have trouble finding shoes that reduce this problem, which increases during warmer weather or whenever sports activities are performed. Various types of footwear have been developed to solve this problem by permitting the elimination of the sweat produced by the foot through the use of breathable soles with holes and the insertion of a breathable, water-repellent membrane or mechanisms in which a system of cushions communicating with the outside of the shoe through body moisture expulsion valves is positioned between the sole's perforated insole and sole in which such body moisture expulsion valves can be applied in different ways according to their method of production, and precisely beneath the shoe's sole or at the side of the same. Such systems currently available in the market pose various problems of practical or productive nature, however.

The practical problems consist in both the scarce ventilation efficacy caused by the fact that these membranes/cushions must be adequately pressed in order to permit all the sweat produced by the foot to be expelled and the fact that both the ventilation holes and sweat expulsion valves positioned beneath the sole become clogged with dirt and sand or even break and lose their efficacy gradually over time.

The productive problems lie in the fact that regardless of whether they are composed of membrane/ventilation chambers or expulsion valves, the ventilation systems currently used can only be inserted in footwear in which the sole has already been inserted. This means that the structures of soles that incorporate membranes/air ducts/valves, etc. must be produced separately and then applied to the upper by gluing, stitching, etc. As is widely-known, a sole produced separately and provided with ventilation membranes/air ducts/valves, etc. and then applied, to the rest of the shoe makes the latter extremely stiff, uncomfortable, and not entirely isolated from the damp and cold.

The patent WO 99/26504 discloses a shoe ventilated through the outsole edges. In this prior art shoes, the ventilation is out of the shoes through the outsole edges i.e. the side edges but is not solved the problem of the air/water return from the outside to inside the shoes, which is solved by the present invention by a non -return valve as explained below.

The patent EP1266585 discloses a shoes with a transpiration system whit sole made by means of plastic material injection. In this prior art the transpiration system doesn't consent an high ventilation due to the lack of flexibility of the material used and the shoes lose the natural flexibility that should have in the walk.

The patent GB2317096 discloses a shoes in which the ventilation is obtained by an air pump installed on the inner sole of the shoes. In this prior art the air pump installed represents a very complex and expensive method of ventilation to realize. The invention is directed to a shoe with an internal ventilation system according to appended claims 1-6.

The invention is also directed to a method for manufacturing a shoe with an internal ventilation system according to appended claims 7-8.

The aim of this invention is the application of an internal footwear ventilation system with a sole applied directly onto the upper through either the direct injection or pouring process . In order to enable the application of a ventilation system in an injection or pouring production process, it is necessary that in an initial preferred embodiment the footwear article be composed of:
- a type of upper commonly available in the market;
- a ventilation chamber composed of a spongy, open-cell material isolated with nonabsorbent material on its side that touches the sole;
- a sole obtained through the injection or pouring of plastic material directly onto the upper in such way as to compose an unbroken whole with the shoe itself;
- a non-return valve commonly available in the market inserted at the side of the sole at the height of the heel;
- an insole with ventilation holes on its surface.

In a second embodiment, the non-return valve can be positioned in a central and/or front and/or rear position at the base of the sole in order to reduce the thickness of the sole and/or its profile.
Figure 1 provides a perspective view of a footwear article that shows the application of the ventilation valve at the side.
Fig. 2 provides a perspective view of the insole.
Fig. 3 offers a perspective view of the ventilation chamber.
Fig. 4 provides a perspective view of the entire ventilation system inside the footwear article.
Fig. 5 offers a perspective view of the footwear article that shows the application of the ventilation valve at the base of the sole. The best way to produce the invention using an injection or pouring production process will be illustrated below.

For greater clarity, the description of the invention will continue by making reference to the enclosed drawings, which are provided purely for purposes of illustration and are not intended to pose any limits on the invention in regard to the production method illustrated.

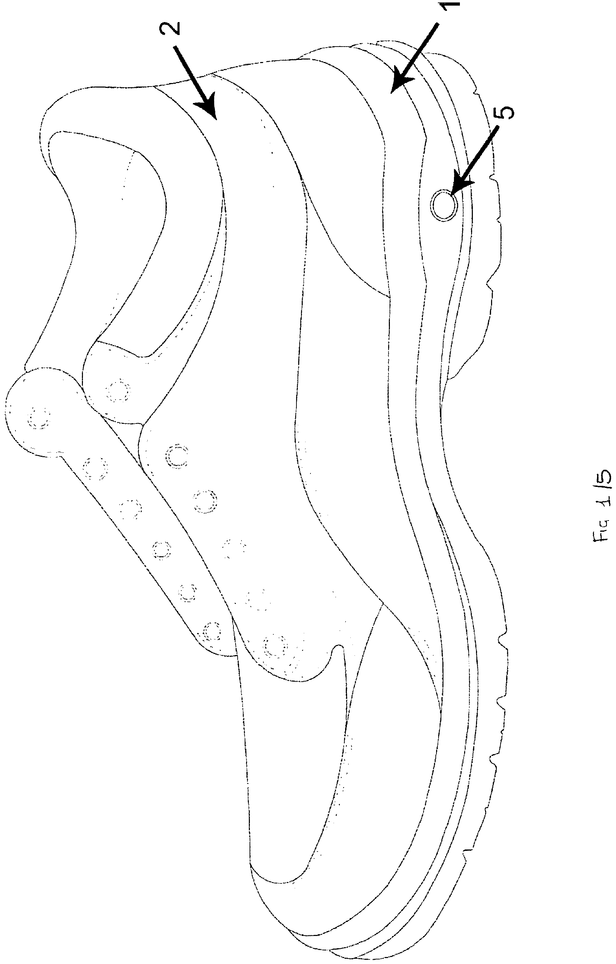

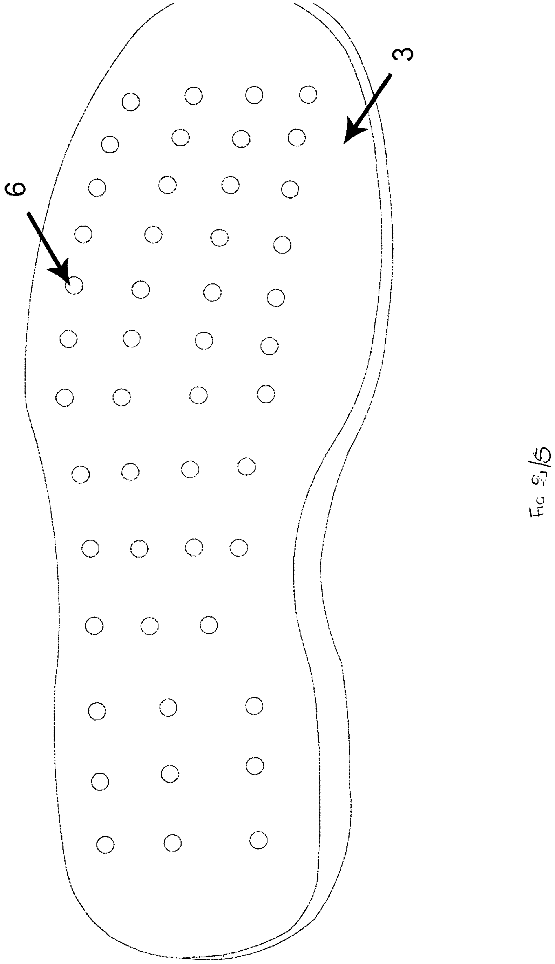

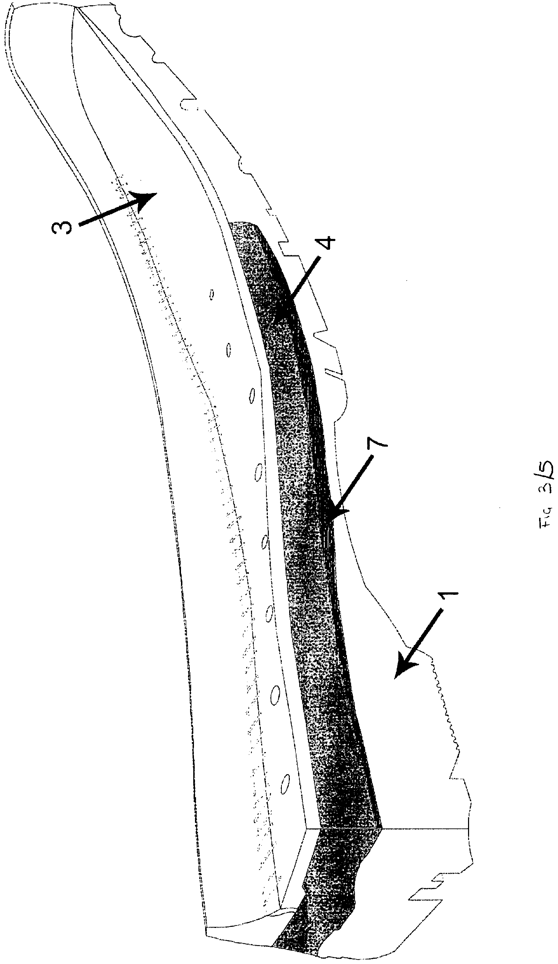

The footwear article **(****Fig. 1****)** is composed of a sole **1,** an upper **2,** an insole **3,** a ventilation chamber **4,** a non-return expulsion valve **5** and a slender layer of non-absorbent material **7,** bonded to the lower surface of the ventilation chamber and incorporated in the sole **1.** The insole **3 (****Fig. 2****)** has ventilation holes **6** near the ventilation chamber **4.** The ventilation chamber **4 (****Fig. 3****)** is composed of a spongy, open-cell material positioned beneath the insole **3** and therefore is positioned between the shoe's sole **1** and insole **3.**

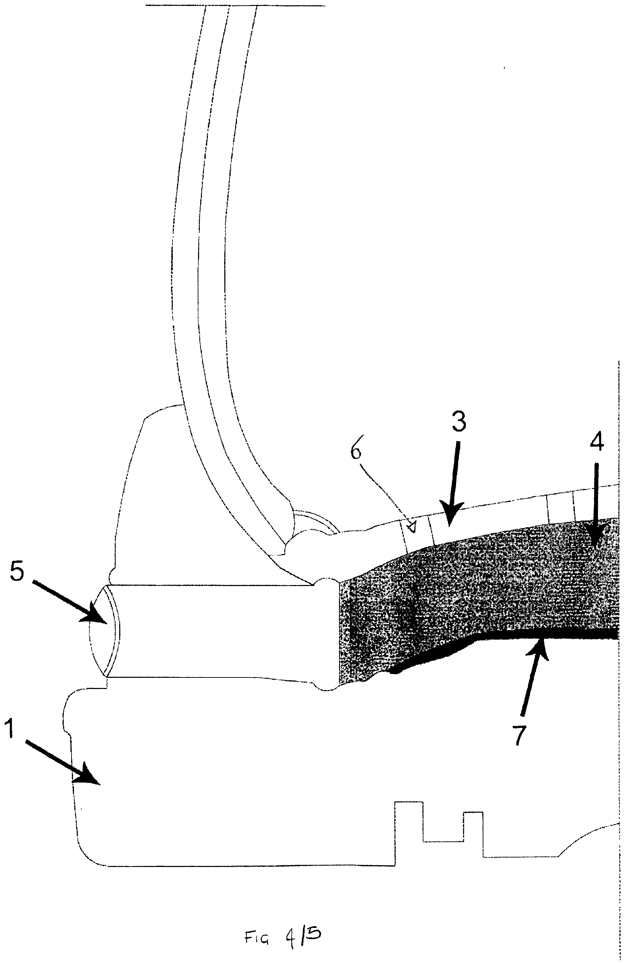

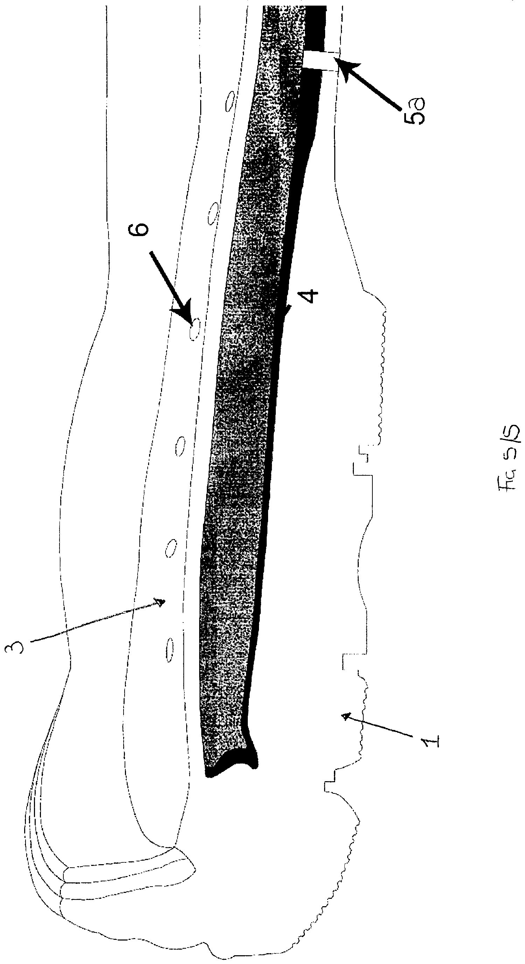

The characteristics of the material used for the ventilation chamber are fundamental for the shoe's correct breathability. The spongy, elastic, open-cell material (in other words, with cells in communication with one another) was expressly selected for its physical characteristics of remarkable breathability that permits constant air exchange, prevention of the formation of humidity, and high mechanical resistance. For this reason, during walking, the mechanical compression of the foot against the ground forces the air in the shoe downwards, and this air flows through the ventilation holes **6** in the insole **3** before reaching the ventilation chamber **4** which is also involved in the compression process and expels the air outward through the non-return valve **5 (****Fig. 4****)** positioned at the side in a preferred embodiment or positioned at the base of the sole in a second embodiment 5a**) (****Fig**. **5****).** The presence of the ventilation chamber in spongy material increases the shoe's softness and comfort and overcomes the aforesaid drawbacks. The non-return expulsion valve **5 (****Fig. 4****)** can be positioned at the side in the shoe's sole **1** in a preferred embodiment or positioned at the base of the sole in a second embodiment **5a) (****Fig. 5****)** in central and/or front and/or rear position. The non-return expulsion valve **5/5a)** is connected inside the sole with the ventilation chamber **4.** Said valve is equipped with a non-return mechanism that permits the air to flow out of the shoe while preventing air and water from entering through an inverse process **(****Fig. 4****).** Depending on the footwear model, the valve can be cylindrical or conical. The ventilation chamber **4** may be preferably obtained through the shaping of sheets of spongy, open-cell material of less thickness than the sole's total thickness and with an outline a few millimeters smaller than the outline of the insole. The ventilation chamber **4** is glued onto the upper surface with the insole **3** already provided with its ventilation holes **6** in its surface.

The ventilation chamber **4** is covered on its lower surface with a thin layer of nonabsorbent material **7** that prevents the polyurethane injected or poured during the moulding of the sole from being absorbed by the open cells in the spongy material which would otherwise compromise correct function. Alternatively, the non-return valve **5**, **5a)** can be prepared and provided in the mould for the sole or inserted subsequently in the sole previously moulded with adequate housing for the valve in mind. As known, in order to obtain the moulding of the sole onto the upper through the injection production process, liquid synthetic material (e.g. polyurethane) is injected into a closed mould through a hole in the side for the direct moulding of the sole onto the upper and then adequate solidification time must be allowed to pass before the footwear article created is removed from the mould. Similarly as known, during the production process based on the pouring process, in order to obtain the moulding of the sole onto the upper, liquid synthetic material is poured from above into a closed mould for the direct moulding of the sole onto the upper and then adequate solidification time must be allowed to pass before the footwear article created is removed from the mould. In both processes, the sole is moulded directly onto the upper by exploiting the high intrinsic adhesion power of polyurethane, which after chemical reaction coagulates and adheres to the upper in order to provide a sole moulded directly onto this latter. The insertion of ventilation systems when these two processes were used was not possible until now. In this case, after preparing and providing the ventilation chamber **4** and the non-return valve **5/5a)** as explained above, the upper is inserted onto the last, the top part of the last is closed, and then the gate is opened for the injection or pouring of the liquid polyurethane inside the mould. In a mechanical foaming process, the liquid polyurethane fills up all the empty parts of the mould in conformation with the design of the sole prepared with the mould in which the ventilation chamber has already been prepared as described above. By bonding with the upper thanks to the high adhesion process, the polyurethane will exactly cover the upper's external shape, including the external shape of the ventilation chamber. In this way, as described, a footwear article with a sole incorporating an efficient ventilation system moulded directly onto the upper is obtained.

The invention offers the following advantages:
It permits the application of the ventilation system inside the footwear article even when the polyurethane required to make the sole is injected/poured directly onto the upper, in this way avoiding the need to apply devices that stiffen the shoe and instead making it even softer, more flexible and comfortable thanks to the presence of the ventilation chamber. Furthermore, because the ventilation chamber and the non-return expulsion valve are inserted in a footwear article in which the sole is directly moulded onto the upper, they are bonded together through a polyurethane injection and/or pouring process, and this provides the footwear article with better isolation against the cold and gives the ventilation chamber and non-return expulsion valve an airtight seal that also increases decompression and the flow of air from inside to outside the footwear article while also precluding the entry of air or water from outside the shoe inside.Because in a preferred embodiment the non-return expulsion valve is positioned on the tread and at the side of the sole, its perfect and continuous operation is guaranteed because it neither clogs or breaks as it is not in contact with the ground. It is obvious that the size and positioning of the holes made in the insole, the volume, height, and width of the ventilation chamber, the positioning of the non-return expulsion valve, and the volumes of air, heat, and sweat that can be expelled with the pressure of the foot on the ground as a logical result will vary depending on both the type of footwear article and its use (sports, walking, safety).

## Claims

1. A shoe with an internal ventilation system, comprising:
- an upper (2);
- a ventilation chamber (4);
- a sole (1) composing an unbroken whole with said shoe, said sole (1) being obtained through the injection or pouring of plastic material into a closed mould, directly onto said upper (2);
- a non-return valve (5, 5a) connected inside said sole (1) with said ventilation chamber (4), said non-return valve (5) having been prepared and provided in said mould or inserted subsequently in the sole (1) previously moulded with adequate housing for the valve in mind;
- an insole (3) with ventilation holes (6) on its surface;
**characterized in that** said ventilation chamber (4) is isolated with nonabsorbent material (7) on its side that touches the sole (1), is glued onto the upper surface with said insole (3) and is composed of spongy, open cell material, being the cells which form said open cell material in communication with one another.

2. A shoe according to claim 1 wherein the ventilation chamber (4) is positioned between said insole (3) and said sole (1).

3. A shoe according to claim 1 or 2 wherein said non-return valve (5) is inserted at the side of said sole (1).

4. A shoe according to claim 1 or 2 wherein said non-return valve (5a) is positioned in a central or front or rear position at the base of said sole (1).

5. A shoe according to any one of the proceeding claims wherein said ventilation chamber (4) is obtained through the shaping of sheets of spongy, open-cell material of less thickness than the total thickness of said sole (1) and with an outline a few millimeters smaller than the outline of said insole (3).

6. A shoe according to any one of the proceeding claims wherein said insole (3) has ventilation holes (6) near said ventilation chamber (4) in such a way to permits to the air to flow in the ventilation chamber (4).

7. A method for manufacturing a shoe with an internal ventilation system, using an injection or pouring production process, **characterized in that** it comprises the following steps:
- preparing a ventilation chamber (4) made of spongy open-cell material, being the cells which form said open cell material in communication with one another;
- isolating said ventilation chamber (4) with nonabsorbent material (7) on its side that is aimed to touch a sole (1);
- gluing said ventilation chamber (4) onto the upper surface with an insole (3);
- preparing a mould for the sole (1) and a non-return valve (5) in said mould;
- inserting an upper (2) onto a last and closing the top part of said last; injecting or pouring liquid polyurethane inside the mould, in such a way the liquid polyurethane fills up all the empty parts of the mould and covers the upper's (2) external shape, including the external shape of the ventilation chamber (4)

8. A method for manufacturing a shoe with an internal ventilation system, using an injection or pouring production process, **characterized in that** it comprises the following steps:
- preparing a ventilation chamber (4) made of spongy open-cell material, being the cells which form said open cell material in communication with one another;
- isolating said ventilation chamber (4) with nonabsorbent material (7) on its side that that is aimed to touch a sole (1);
- gluing said ventilation chamber (4) onto the upper surface with an insole (3);
- preparing a mould for the sole (1), with an adequate housing for a non-return valve;
- inserting an upper (2) onto a last and closing the top part of said last;
- injecting or pouring liquid polyurethane inside the mould, in such a way the liquid polyurethane fills up all the empty parts of the mould and covers the upper's (2) external shape, including the external shape of the ventilation chamber (4);
- inserting a non-return valve (5a) in the housing previously moulded in the sole (1).

## Patentansprüche

1. Schuh mit einem internen Ventilationssystem, der folgendes umfasst:
- ein Oberteil (2);
- eine Ventilationskammer (4);
- eine Sohle, die eine ununterbrochene Gesamtheit mit dem Schuh bildet, wobei die Sohle (1) durch Einspritzen oder Gießen eines plastischen Materials in eine geschlossene Form direkt auf dem Oberteil (2) erhalten wird;
- ein Einwegventil (5, 5a), das innerhalb der Sohle (1) mit der Ventilationskammer (4) verbunden ist, wobei das Einwegventil (5) in der Form bereitgestellt und angeordnet wurde oder nachträglich in die Sohle (1) eingeführt worden ist, die zuvor mit einem für das Ventil geeigneten Gehäuse geformt wurde;
- eine Innensohle (3) mit Ventilatianslöchern (6) auf ihrer Oberfläche;
**dadurch gekennzeichnet, dass** die Ventilationskammer (4) mit einem nicht-absorbierenden Material (7) auf der Seite isoliert ist, welche die Sohle (1) berührt, an der oberen Fläche mit der Innensohle (3) verklebt ist, und aus einem schwammigen, offenzelligen Material besteht, wobei die Zellen, die das offenzellige Material bilden, in Verbindung miteinander sind.

2. Schuh nach Anspruch 1, wobei die Ventilationskammer (4) zwischen der Innensohle (3) und der Sohle (1) angeordnet ist.

3. Schuh nach Anspruch 1 oder 2, wobei das Einwegventil (5) an der Seite der Sohle (1) eingeführt ist.

4. Schuh nach Anspruch 1 oder 2, wobei das Einwegventil (5a) in einer mittigen oder vorderen oder hinteren Position auf dem Boden der Sohle (1) angeordnet ist.

5. Schuh nach einem der vorhergehenden Ansprüche, wobei die Ventilationskammer (4) durch Formen von Schichten des schwammigen offenzelligen Materials erhalten wird, wobei das Materialeine Dicke aufweist, die kleiner als die gesamte Dicke der Sohle (1) ist, und eine Kontur aufweist, die wenige Millimeter kleiner als die Kontur der Innensohle (3) ist.

6. Schuh nach einem der vorhergehenden Ansprüche, wobei die Innensohle (3) Ventilationslöcher (6) in der Nähe der Ventilationskammer (4) aufweist, sodass Luft in die Ventilationskammer (4) strömen kann.

7. Verfahren zur Herstellung eines Schuhs mit einem internen Ventilationssystem durch einen Einspritz- oder Gußherstellungsprozess, **dadurch gekennzeichnet, dass** das Verfahren folgende Schritte umfasst:
- Bereitstellen einer Ventilationskammer (4), die aus einem schwammigen, offenzelligen Material besteht, wobei die Zellen, die das offenzellige Material bilden, in Verbindung miteinander sind;
- Isolieren der Ventilationskammer (4) mit einem nicht-absorbierenden Material (7) auf der Seite, die eine Sohle (1) berühren soll;
- Verkleben der Ventilationskammer (4) an der oberen Fläche mit einer Innensohle (3);
- Bereitstellen einer Form für die Sohle (1) und eines Einwegventils (5) in der Form;
- Einführen eines Oberteils (2) auf einen Schuhleisten und Verschließen des oberen Teils des Schuhleistens; Einspritzen oder Gießen von flüssigem Polyurethan in die Form derart, dass das flüssige Polyurethan alle leeren Stellen der Form auffüllt, und die Außenform des Oberteils (2), einschließlich der Außenform der Ventilationskammer (4), bedeckt.

8. Verfahren zur Herstellung eines Schuhs mit einem internen Ventilationssystem durch einen Einspritz- oder Gußherstellungsprozess, **dadurch gekennzeichnet, dass** das Verfahren folgende Schritte umfasst:
- Bereitstellen einer Ventilatianskammer (4), die aus einem schwammigen, offenzelligen Material besteht, wobei die Zellen, die das offenzellige Material bilden, in Verbindung miteinander sind;
- Isolieren der Ventilationskammer (4) mit einem nicht-absorbierenden Material (7) auf der Seite, die eine Sohle (1) berühren soll;
- Verkleben der Ventilationskammer (4) an der oberen Fläche mit einer Innensohle (3);
- Bereitstellen einer Form für die Sohle (1), wobei die Form ein für ein Einwegventil geeignetes Gehäuse aufweist;
- Einführen eines Oberteils (2) auf einen Schuhleisten und Verschließen des oberen Teils des Schuhleistens;
- Einspritzen oder Gießen von flüssigem Polyurethan in die Form derart, dass das flüssige Polyurethan alle leeren Stellen der Form auffüllt, und die Außenform des Oberteils (2), einschließlich der Außenform der Ventilationskammer (4), bedeckt;
- Einführen eines Einwegventils (5a) in das Gehäuse, wobei das Gehäuse zuvor in der Sohle (1) geformt wurde.

## Revendications

1. Chaussure comportant un système de ventilation intérieure, comprenant :
- une tige (2) ;
- une chambre de ventilation (4) ;
- une semelle (1) composant un ensemble ininterrompu avec ladite chaussure, ladite semelle (1) étant obtenue via l'injection ou le coulage de matière plastique dans un moule fermé, directement sur ladite tige (2) ;
- un clapet anti-retour (5, 5a) relié à l'intérieur de ladite semelle (1) à ladite chambre de ventilation (4), ledit clapet anti-retour (5) ayant été préparé et prévu dans ledit moule ou inséré ultérieurement dans la semelle (1) préalablement moulée avec un logement adéquat pour le clapet en vue ;
- une semelle intérieure (3) avec des orifices de ventilation (6) sur sa surface ;
**caractérisée en ce que** ladite chambre de ventilation (4) est isolée à l'aide d'une matière non absorbante (7) sur son côté qui touche la semelle (1), est collée sur la surface supérieure avec ladite semelle intérieure (3) et est composée d'une matière spongieuse à cellules ouvertes, les cellules qui forment ladite matière à cellules ouvertes étant en communication les unes avec les autres.

2. Chaussure selon la revendication 1 dans laquelle la chambre de ventilation (4) est positionnée entre ladite semelle intérieure (3) et ladite semelle (1).

3. Chaussure selon la revendication 1 ou 2 dans laquelle ledit clapet anti-retour (5) est inséré au niveau du côté de ladite semelle (1).

4. Chaussure selon la revendication 1 ou 2 dans laquelle ledit clapet anti-retour (5a) est positionné en position centrale ou avant ou arrière au niveau de la base de ladite semelle (1).

5. Chaussure selon l'une quelconque des revendications précédentes dans laquelle ladite chambre de ventilation (4) est obtenue via le façonnage de feuilles de matière spongieuse à cellules ouvertes, d'une épaisseur inférieure à l'épaisseur totale de ladite semelle (1) et avec un contour plus petit de quelques millimètres que le contour de ladite semelle intérieure (3).

6. Chaussure selon l'une quelconque des revendications précédentes dans laquelle ladite semelle intérieure (3) présente des orifices de ventilation (6) à proximité de ladite chambre de ventilation (4) de manière à permettre à l'air de circuler dans la chambre de ventilation (4).

7. Procédé pour fabriquer une chaussure comprenant un système de ventilation intérieure, utilisant un processus de production par injection ou coulage, **caractérisé en ce qu'**il comprend les étapes suivantes ;
- la préparation d'une chambre de ventilation (4) composée d'une matière spongieuse à cellules ouvertes, les cellules qui forment ladite matière à cellules ouvertes étant en communication les unes avec les autres ;
- l'isolation de ladite chambre de ventilation (4) à l'aide d'une matière non absorbante (7) sur son côté qui est destiné à toucher une semelle (1) ;
- le collage de ladite chambre de ventilation (4) sur la surface supérieure avec une semelle intérieure (3) ;
- la préparation d'un moule pour la semelle (1) et d'un clapet anti-retour (5) dans ledit moule ;
- l'insertion d'une tige (2) dans une forme et la fermeture de la partie supérieure de ladite dernière ; l'injection ou le coulage de polyuréthane liquide à l'intérieur du moule, de manière à ce que le polyuréthane liquide remplisse toutes les parties vides du moule et recouvre la forme extérieure de la tige (2), y compris la forme extérieure de la chambre de ventilation (4).

8. Procédé pour fabriquer une chaussure comportant un système de ventilation intérieure, utilisant un processus de production par injection ou coulage, **caractérisé en ce qu'**il comprend les étapes suivantes :
- la préparation d'une chambre de ventilation (4) composée d'une matière spongieuse à cellules ouvertes, les cellules qui forment ladite matière à cellules ouvertes étant en communication les unes avec les autres ;
- l'isolation de ladite chambre de ventilation (4) à l'aide d'une matière non absorbante (7) sur son côté qui est destiné à toucher une semelle (1) ;
- le collage de ladite chambre de ventilation (4) sur la surface supérieure avec une semelle intérieure (3) ;
- la préparation d'un moule pour la semelle (1), avec un logement adéquat pour un clapet anti-retour ;
- l'insertion d'une tige (2) dans une forme et la fermeture de la partie supérieure de ladite dernière ;
- l'injection ou le coulage de polyuréthane liquide à l'intérieur du moule, de manière à ce que le polyuréthane liquide remplisse toutes les parties vides du moule et recouvre la forme extérieure de la tige (2), y compris la forme extérieure de la chambre de ventilation (4) ;
- l'insertion d'un clapet anti-retour (5a) dans le logement préalablement moulé dans la semelle (1).
